(19) Europäisches Patentamt
European Patent Office
Office européen des brevets

(11) **EP 4 768 351 A1**

(12) **EUROPEAN PATENT APPLICATION**

(43) Date of publication:
**01.07.2026 Bulletin 2026/27**

(21) Application number: **24223614.9**

(22) Date of filing: **30.12.2024**

(51) International Patent Classification (IPC):
**B60T 8/1755** (2006.01)    **B60T 8/32** (2006.01)
**B60W 10/12** (2012.01)    **B60W 10/16** (2012.01)
**B60W 10/184** (2012.01)    **B60W 30/18** (2012.01)

(52) Cooperative Patent Classification (CPC):
**B60T 8/3215; B60T 8/17551; B60W 10/12;**
**B60W 10/16; B60W 10/184; B60W 30/18145;**
**B60W 30/18172;** B60T 8/322; B60T 2201/14;
B60T 2201/16; B60T 2270/606; B60W 2510/12;
B60W 2520/266; B60W 2710/12; B60W 2720/266;
(Cont.)

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(71) Applicant: **Hyundai Mobis Co., Ltd.**
**Gangnam-gu**
**Seoul 06141 (KR)**

(72) Inventor: **PINTO, Lorenzo**
**60316 Frankfurt am Main (DE)**

(74) Representative: **Vossius & Partner**
**Patentanwälte Rechtsanwälte mbB**
**Siebertstrasse 3**
**81675 München (DE)**

(54) **METHOD AND APPARATUS FOR IMPROVING STABILITY OF DIRECTIONAL CORNERING OF VEHICLE USING LIMITED SLIP DIFFERENTIAL AND TORQUE VECTORING BY-BRAKE**

(57)    A method and an apparatus for improving the stability of directional cornering of a vehicle by using a limited slip differential (LSD) and torque vectoring by-brake are provided. According to the present disclosure, a method executed by a vehicle control device, the method includes activating torque vectoring by-brake control when a vehicle travels a corner, calculating an actual differential slip of the vehicle and a threshold value, comparing the actual differential slip with the threshold value, maintaining the activation of the torque vectoring by-brake control when the actual differential slip is smaller than the threshold value and gradually deactivating the torque vectoring by-brake control and activating a limited slip differential (LSD) when the actual differential slip is not smaller than the threshold value.

<u>10</u>

**FIG. 1**

(52) Cooperative Patent Classification (CPC): (Cont.)
B60W 2720/406; B60Y 2300/80; B60Y 2300/82;
B60Y 2400/804

## Description

### TECHNICAL FIELD

The present disclosure relates to a method and apparatus for improving the stability of directional cornering of a vehicle by using a limited slip differential (LSD) and torque vectoring by-brake. More specifically, the present disclosure relates to a method and apparatus for activating or deactivating an LSD and torque vectoring by-brake control by controlling an LSD device or a torque vectoring by-brake control device by comparing an actual differential slip with a threshold value.

### BACKGROUND

The content described below merely provides background information related to the present embodiment and does not constitute prior art.

When a vehicle travels a corner, an appropriate differential function is essential to enable the vehicle to turn smoothly. However, when the vehicle accelerates while turning, a turning speed of the vehicle can be improved by detecting slip of an inner wheel of the turning and limiting the differential to transmit driving power to an outer wheel of the turning. Accordingly, recently, vehicles are equipped with a limited slip differential (LSD) device to control the driving power of a left wheel and a right wheel to improve handling performance and off-road performance. The LSD device actively and precisely controls the relative slip of the left wheel and the right wheel.

The torque vectoring control device is a device that independently and freely controls the amount of torque transmitted to the left and right wheels in order to improve the travel performance and handling performance of the vehicle. The torque vectoring is a technology for expressing both the magnitude and direction of the output or driving power of a driving device transmitted to the driving wheels of the vehicle, and changing the magnitude and direction of the torque transmitted to the wheels, especially the torque transmitted to the left and right wheels on the same axle line. The torque vectoring by-brake is a particular case of general torque vectoring technology, in which single-wheel brakig is used to prevent high slip on one wheel of an axle line, and this single-wheel braking actuation has also the effect to transmit driving torque on the other wheel of same axle line. An advantage of torque vectoring by-brake control is that it can use single-wheel brake actuation already available on all vehicles equipped with ESC (Electronic Stability Control). In this present disclosure, when referring to torque vectoring, it is always indended the particular case of torque vectoring by-brake.

When the LSD device is activated, understeer or oversteer may occur. Commonly used LSD devices (speed-sensitive LSD, torque-sensitive LSD, Electronically Controlled LSD) are aimed at improving traction by transfering driving torque from the faster wheel to the slower wheel of the axle but are not capable to control understeer or oversteer. On the contrary, their activation can induce understeer or oversteer, depending from driving scenario. The only LSD device capable to also directly control understeer or oversteer is the so called Torque-Vectoring LSD, which has the disadvantage of high complexity and large packagingIn particular, electric vehicles require high regenerative braking, which may also cause excessive oversteer or understeer in corners. Accordingly, research is needed to prevent unexpected understeer or oversteer when the vehicle including the LSD device turns a corner, using the torque vectoring control device.

### SUMMARY

An object of the present disclosure is to gradually deactivate torque vectoring by-brake control and activate limited slip differential by comparing actual differential slip with a threshold value.

Additionally, according to one embodiment, an object of the present disclosure is to determine the threshold value to be compared with the actual differential slip.

Furthermore, according to one embodiment, an object of the present disclosure is to apply a method for improving the stability of directional cornering of a vehicle to all types of LSD devices.

Objects to be solved by the present disclosure are not limited to the objects mentioned above, and other problems not mentioned will be clearly understood by those skilled in the art from the description below.

The present invention is defined by independent claim 1, 6, and 10; the dependent claims describe embodiments of the present invention. According to embodiments of the present disclosure, a method executed by a vehicle control device, the method includes activating torque vectoring by-brake control when a vehicle travels a corner, calculating an actual differential slip of the vehicle and a threshold value, comparing the actual differential slip with the threshold value, maintaining the activation of the torque vectoring by-brake control when the actual differential slip is smaller than the threshold value and gradually deactivating the torque vectoring by-brake control and activating a limited slip differential (LSD) when the actual differential slip is not smaller than the threshold value.

According to embodiments of the present disclosure, a vehicle control device includes a memory and at least one processor, the at least one processor being configured to activate torque vectoring by-brake control when a vehicle travels a corner, calculate an actual differential slip of the vehicle and a threshold value, compare the actual differential slip with the threshold value, maintain the activation of the torque vectoring by-brake control when the actual differential slip is smaller than the threshold value and gradually deactivate the torque vectoring by-brake control and activate a limited slip differential (LSD) when the actual differential slip is not smaller than the threshold value

According to embodiments of the present disclosure, a non-transitory computer-readable recording medium in which an instruction is stored, wherein the instruction causes, when executed by a computer, the computer to perform: activating torque vectoring by-brake control when a vehicle travels a corner, calculating an actual differential slip of the vehicle and a threshold value, comparing the actual differential slip with the threshold value, maintaining the activation of the torque vectoring by-brake control when the actual differential slip is smaller than the threshold value and gradually deactivating the torque vectoring by-brake control and activating a limited slip differential (LSD) when the actual differential slip is not smaller than the threshold value.

According to the present disclosure, it is possible to improve the stability of directional cornering of a vehicle.

Additionally, according to one embodiment, it is possible to reduce the risk of the vehicle transitioning from understeer to oversteer when traveling around a corner.

In addition, according to one embodiment, it is possible to improve the durability of limited slip differential (LSD) device mounted on a vehicle.

The effects obtainable from the present disclosure are not limited to the effects mentioned above, and other effects not mentioned will be clearly understood by a person skilled in the art to which the present disclosure belongs from the description below.

## BRIEF DESCRIPTION OF THE DRAWINGS

Fig. 1 is a block diagram illustrating a vehicle control device according to one embodiment of the present disclosure.
Fig. 2 is a flowchart illustrating a process of activating or deactivating torque vectoring control and limited slip differential (LSD) when a vehicle turns a corner, according to one embodiment of the present disclosure.
Fig. 3 is a flowchart illustrating a process of activating or deactivating torque vectoring control and LSD when a vehicle turns a corner, according to another embodiment of the present disclosure.
Fig. 4 is a flowchart illustrating a process of activating or deactivating torque vectoring control and LSD when a vehicle turns a corner while coasting according to one embodiment of the present disclosure.
Fig. 5 is a flowchart illustrating a method for improving the stability of directional cornering of a vehicle according to one embodiment of the present disclosure.

## DETAILED DESCRIPTION

Hereinafter, some exemplary embodiments of the present disclosure will be described in detail with reference to the accompanying drawings. In the following description, like reference numerals preferably designate like elements, although the elements are shown in different drawings. Further, in the following description of some embodiments, a detailed description of known functions and configurations incorporated therein will be omitted for the purpose of clarity and for brevity.

Additionally, various terms such as first, second, A, B, (a), (b), etc., are used solely to differentiate one component from the other but not to imply or suggest the substances, order, or sequence of the components. Throughout this specification, when a part 'includes' or 'comprises' a component, the part is meant to further include other components, not to exclude thereof unless specifically stated to the contrary. The terms such as 'unit', 'module', and the like refer to one or more units for processing at least one function or operation, which may be implemented by hardware, software, or a combination thereof.

The following detailed description, together with the accompanying drawings, is intended to describe exemplary embodiments of the present disclosure and is not intended to represent the only embodiments in which the present disclosure may be practiced.

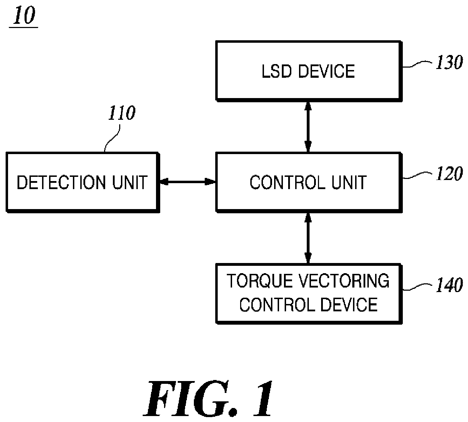

Fig. 1 is a block diagram illustrating a vehicle control device according to one embodiment of the present disclosure.

Referring to Fig. 1, the vehicle control device 10 includes all or part of a detection unit 110, a control unit 120, an LSD (Limited Slip Differential) device 130, and a torque vectoring control device 140. The vehicle control device 10 and each component thereof may be implemented as hardware or software, or may be implemented as a combination of hardware and software. In addition, the function of each component may be implemented as software, and one or more processors may be implemented to execute the function of the software corresponding to each component.

The detection unit 110 detects a travel status of the vehicle, an angular velocity of a wheel, a speed of the wheel, and a cornering radius of the wheel. The control unit 120 compares actual differential slip with a threshold value and transmits a control signal to the LSD device 130 and the torque vectoring control device 140. The actual differential slip is a difference between left wheel slip and right wheel slip based on an axle and may be an actual grip level difference between the left and right tires. Here, the slip may be a value based on the difference between the travel speed and the wheel speed of the vehicle. The control unit 120 determines the threshold value using a distance between the left and right tires, a left wheel speed, a right wheel speed, a radius of the tire, the cornering radius of the wheel, and the angular velocity of the vehicle. When the actual differential slip is smaller than the threshold value, the control unit 120 controls the LSD device 130 and the torque vectoring control device 140 so that the activation of the torque vectoring by-brake control is maintained and the LSD is deactivated. When the actual differential slip is not smaller than the threshold value, the control unit 120 controls the LSD device 130 and the torque vectoring control device 140 to gradually deactivate the torque vectoring by-brake control and activate the LSD. The activating of the LSD means the same thing as the LSD being locked.

The LSD device 130 activates the LSD and distributes and controls the driving force to the left wheel and the right wheel With activation enabled by control unit 120, the driving force distribution to the left and right wheel of the LSD device 130 has the effect of keep the vehicle response predictable. Viceversa, the LSD device 130 may transmit a larger torque to an inner wheel than to an outer wheel, thereby transmitting a larger driving force to the inner wheel and inducing understeer Here, the understeer means that the vehicle turns smaller than handling of a driver. Or, the LSD device may 130 transmit a larger torque to the outer wheel than to the inner wheel, thereby transmitting a larger driving force to the outer wheel, then inducing oversteer. Here, the oversteer means that the vehicle turns more than the handling of the driver. The LSD device 130 includes a general LSD device, a speed-sensitive LSD device, a torque-sensitive LSD device, and an electronically controlled LSD device. The LSD device 130 does not include a Torque-Vectoring LSD device. The speed-sensitive LSD device is a device that activates the LSD according to the difference between the left wheel speed and the right wheel speed based on the axle. A torque-sensitive LSD device activates the LSD according to the difference in torque between the left and right wheels based on the axle. An electronically controlled LSD device distributes driving power to slower wheel of the axle using electronic control logic. A Torque-Vectoring LSD device (not included in LSD device 130) freey distributes driving power to the left and right wheels of the axle, independently of their relative speed, using electronic control logic.

The torque vectoring control device 140 independently and freely controls the amount of torque transmitted by the faster wheel to the slower wheel of the axle.. In the process of controlling the amount of torque, the travel speed, steering angle, yaw rate, lateral acceleration, wheel speed, or the like of the vehicle may be monitored. The torque vectoring control device 140 adjusts the amount of torque transmitted to the left wheel and the right wheel while applying braking force by the brake. The torque vectoring control device 140 may directly reduce the amount of torque transmitted to the inner wheel and indirectly increase the amount of torque transmitted to the outside wheel when the vehicle turns a corner, thereby causing the vehicle to enter an oversteer state. When the vehicle turns a corner, in a case where the torque vectoring control device 140 performs torque vectoring by-brake control and then the LSD device 130 activates the LSD, the vehicle may gradually enter an oversteer state. Accordingly, the vehicle can be prevented from transitioning from an understeer state to an oversteer state.

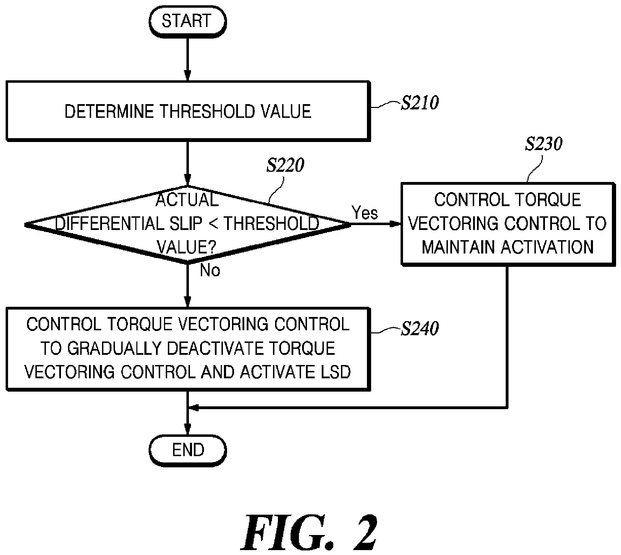

Fig. 2 is a flowchart illustrating a process of activating or deactivating the torque vectoring control and the LSD when the vehicle turns a corner, according to one embodiment of the present disclosure.

Referring to Fig. 2, when the vehicle travels by acceleration from a corner, the control unit 120 determines the threshold value (S210). This case is a case when the driver is stepping on an accelerator pedal of the vehicle. When the vehicle travels by acceleration from a corner, the torque vectoring by-brake control is preferentially activated. The threshold value may be determined based on $\triangle TiresGrip_{LockedLSD}$, and $\triangle TiresGrip_{LockedLSD}$ may be expressed as Mathematical Formula 1.

[Mathematical Formula 1]

$$\triangle TiresGrip_{LockedLSD} = \frac{\psi * track}{\frac{(\omega_1 + \omega_2)}{2} * r}$$

Here, wi may be an angular velocity of the left wheel of the vehicle, $w_2$ may be an angular velocity of the right wheel of the vehicle, respectively. r may be a radius of the wheel of the vehicle, track may be a distance between the left wheel and the right wheel. $\psi$ may be an angular velocity of the vehicle turning the corner. The control unit 120 determines a value corresponding to a predetermined ratio of $\triangle TiresGrip_{LockedLSD}$ as the threshold value. For example, the control unit 120 may determine a value corresponding to 70% of $\triangle TiresGrip_{LockedLSD}$ as the threshold value.

The control unit 120 determines whether the actual differential slip is smaller than the threshold value (S220). $\triangle TiresGrip_{actual}$ which is the actual differential slip may be expressed as Mathematical Formula 2.

[Mathematical Formula 2]

$$\Delta \boldsymbol{TiresGrip_{actual}} = Tire_{SlipL} - Tire_{SlipR} = \frac{\omega_L * r - Vx_L}{\omega_L * r} - \frac{\omega_R * r - Vx_R}{\omega_R * r}$$

Here, $w_L$ may be the angular velocity of the left wheel of the vehicle and $w_R$ may be the angular velocity of the right wheel of the vehicle, r may be a radius of the wheel of the vehicle, $Vx_L$ may be a tangential velocity of the left wheel, and $Vx_R$ may be a tangential velocity of the right wheel. $Vx_L$ may be calculated by multiplying the angular velocity of the vehicle turning a corner by the cornering radius of the left wheel. $Vx_R$ may be calculated by multiplying the angular velocity of the vehicle turning a corner by the cornering radius of the right wheel.

When it is determined that the actual differential slip is smaller than the threshold value (S220-YES), the control unit 120 controls the LSD device 130 and the torque vectoring by-brake control device 140 to maintain the activation of the torque vectoring by-brake control and deactivate the LSD (S230). When it is determined that the actual differential slip is not smaller than the threshold value (S220-NO), the control unit 120 controls the LSD device 130 and the torque vectoring control device 140 to gradually deactivate the torque vectoring by-brake control and activate the LSD (S240). The torque vectoring by-brake control may be completely deactivated when the actual differential slip becomes equal to $\triangle$TiresGrip$_{LockedLSD}$. Here, the LSD device 130 may be a general LSD device, a speed-sensitive LSD device, or an electronically controlled LSD device.

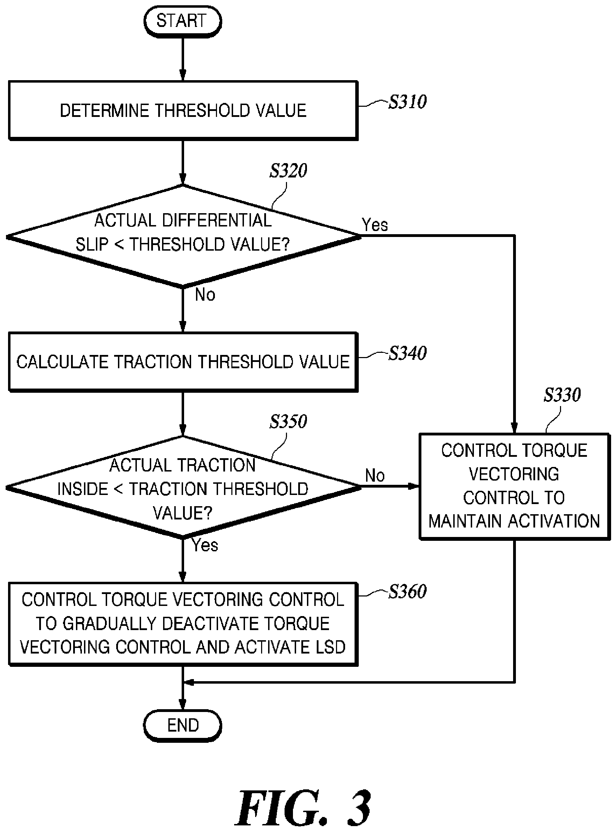

Fig. 3 is a flowchart illustrating a process of activating or deactivating the torque vectoring control and LSD when a vehicle turns a corner, according to another embodiment of the present disclosure.

Referring to Fig. 3, when the vehicle travels by acceleration at a corner, the control unit 120 determines the threshold value (S310). This is the case when the driver is pressing the accelerator pedal of the vehicle. When the vehicle travels by acceleration at a corner, the torque vectoring by-brake control is preferentially activated. The threshold value may be determined based on $\triangle$TiresGrip$_{LockedLSD}$. The control unit 120 determines a value corresponding to a predetermined ratio of $\triangle$TiresGrip$_{LockedLSD}$ as the threshold value. For example, the control unit 120 may determine a value corresponding to 70% of $\triangle$TiresGrip$_{LockedLSD}$ as the threshold value.

The control unit 120 determines whether the actual differential slip is smaller than the threshold value (S320). When it is determined that the actual differential slip is smaller than the threshold value (S320-YES), the control unit 120 controls the LSD device 130 and the torque vectoring control device 140 to maintain the activation of the torque vectoring by-brake control and deactivate the LSD (S330). When it is determined that the actual differential slip is not smaller than the threshold value (S320-NO), the control unit 120 calculates a traction threshold value (S340). The control unit 120 may estimate a vertical force of the wheel according to the Kamm's Circle theory, assume the limit of the friction force as a circle, and calculate the traction threshold value that can be generated within a friction limit by estimating a lateral force currently generated from the wheel.

The control unit 120 determines whether the actual traction inside the wheel is smaller than the traction threshold value (S350). When it is determined that the actual traction inside the wheel is not smaller than the traction threshold value (S350-NO), the control unit 120 controls the LSD device 130 and the torque vectoring control device 140 to maintain the activation of the torque vectoring by-brake control and deactivate the LSD (S330). When it is determined that the actual traction inside the wheel is smaller than the traction threshold value (S350-YES), the control unit 120 controls the LSD device 130 and the torque vectoring control device 140 to gradually deactivate the torque vectoring by-brake control and activate the LSD (S360). The torque vectoring by-brake control may be completely deactivated when the actual differential slip becomes equal to $\triangle$TiresGrip$_{LockedLSD}$. Here, the LSD device 130 may be a torque-sensitive LSD device.

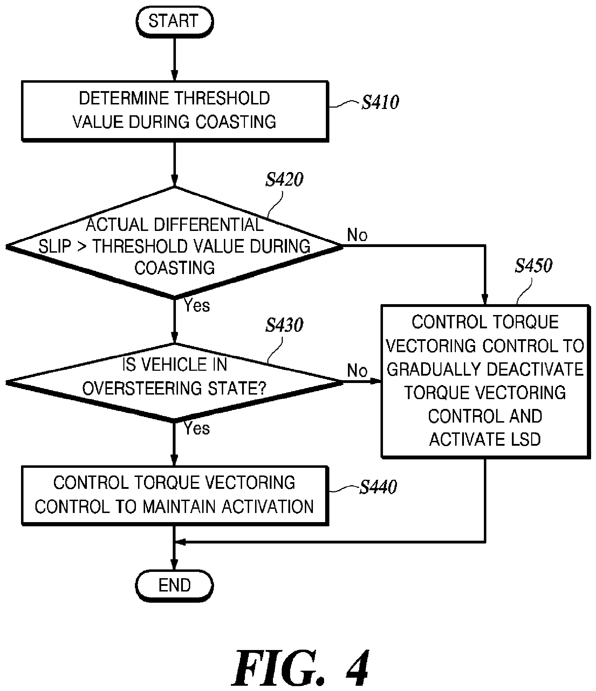

Fig. 4 is a flowchart illustrating a process of activating or deactivating the torque vectoring control and LSD when a vehicle turns a corner while coasting according to one embodiment of the present disclosure.

Referring to Fig. 4, when the vehicle coasts at a corner, the control unit 120 determines a threshold value during the coasting (S410). This is the case when the driver does not step on the accelerator pedal of the vehicle. When the vehicle coasts at a corner, the torque vectoring by-brake control is preferentially activated. The threshold value during the coasting is determined based on $\triangle$TiresGrip$_{coasting}$, and $\triangle$TiresGrip$_{coasting}$ may be expressed as Mathematical Formula 3.

[Mathematical Formula 3]

$$\Delta \boldsymbol{TiresGrip_{coasting}} = \frac{\frac{(\omega_1 + \omega_2)}{2} * r * track}{\psi * R1 * R2}$$

Here, $w_1$ and $w_2$ may be the angular velocity of the left wheel and the angular velocity of the right wheel, respectively. r may be the radius of the wheel, and track may be the distance between the left wheel and the right wheel. $\psi$ may be the angular velocity of the vehicle turning a corner. R1 may be the cornering radius of the left wheel, and R2 may be the cornering radius of the right wheel. The control unit 120 determines a value corresponding to a predetermined ratio of $\triangle TiresGrip_{coasting}$ as the threshold value during the coasting. For example, the control unit 120 may determine a value corresponding to 70% of $\triangle TiresGrip_{coasting}$ as the threshold value during the coasting.

The control unit 120 determines whether the actual differential slip is greater than the threshold value during the coasting (S420). When it is determined that the actual differential slip is greater than the threshold value during the coasting (S420-YES), the control unit 120 determines whether the vehicle is in an oversteering state (S430). When it is determined that the vehicle is in an oversteering state (S430-YES), the control unit 120 controls the LSD device 130 and the torque vectoring control device 140 to maintain the activation of the torque vectoring by-brake control and deactivate the LSD (S440). When it is determined that the vehicle is not in the oversteering state (S430-NO), the control unit 120 controls the LSD device 130 and the torque vectoring control device 140 to gradually deactivate the torque vectoring by-brake control and activate the LSD (S450).

When it is determined that the actual differential slip is not greater than the threshold value during the coasting (S420-NO), the control unit 120 controls the LSD device 130 and the torque vectoring control device 140 to gradually deactivate the torque vectoring by-brake control and activate the LSD (S450). The torque vectoring by-brake control may be completely deactivated when the actual differential slip becomes equal to $\triangle TiresGrip_{coasting}$. Here, the LSD device 130 may be a torque-sensitive LSD device.

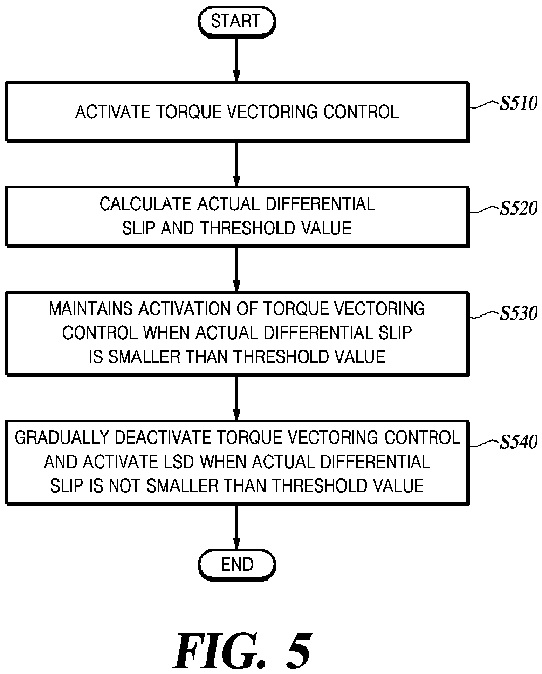

Fig. 5 is a flowchart illustrating a method for improving the stability of the directional cornering of the vehicle according to one embodiment of the present disclosure.

Referring to Fig. 5, the vehicle control device 10 activates the torque vectoring by-brake control when the vehicle travels around a corner (S510). The control device 10 calculates the actual differential slip of the vehicle and the threshold value (S520). The threshold value may be calculated based on $\triangle TiresGrip_{LockedLSD}$. A value corresponding to a predetermined ratio of $\triangle TiresGrip_{LockedLSD}$ may be determined as the threshold value. Here, the predetermined ratio may be 70%.

The control device 10 compares the actual differential slip with the threshold value (S530). When the actual differential slip is smaller than the threshold value, the control device 10 maintains the activation of the torque vectoring by-brake control (S530). When the actual differential slip is not smaller than the threshold value, the control device 10 gradually deactivates the torque vectoring by-brake control and activates the LSD (S540). When the actual differential slip is not smaller than the threshold value, the torque vectoring by-brake control can be completely deactivated when the actual differential slip becomes equal to $\triangle TiresGrip_{LockedLSD}$. Here, the LSD device 130 may be a general LSD device, a speed-sensitive LSD device, or an electronically controlled LSD device.

Each element of the apparatus or method in accordance with the present disclosure may be implemented in hardware or software, or a combination of hardware and software. The functions of the respective elements may be implemented in software, and a microprocessor may be implemented to execute the software functions corresponding to the respective elements.

Various embodiments of systems and techniques described herein can be realized with digital electronic circuits, integrated circuits, field programmable gate arrays (FPGAs), application specific integrated circuits (ASICs), computer hardware, firmware, software, and/or combinations thereof. The various embodiments can include implementation with one or more computer programs that are executable on a programmable system. The programmable system includes at least one programmable processor, which may be a special purpose processor or a general purpose processor, coupled to receive and transmit data and instructions from and to a storage system, at least one input device, and at least one output device. Computer programs (also known as programs, software, software applications, or code) include instructions for a programmable processor and are stored in a "computer-readable recording medium."

The computer-readable recording medium may include all types of storage devices on which computer-readable data can be stored. The computer-readable recording medium may be a non-volatile or non-transitory medium such as a read-only memory (ROM), a random access memory (RAM), a compact disc ROM (CD-ROM), magnetic tape, a floppy disk, or an optical data storage device. In addition, the computer-readable recording medium may further include a transitory medium such as a data transmission medium. Furthermore, the computer-readable recording medium may be distributed over computer systems connected through a network, and computer-readable program code can be stored and executed in a distributive manner.

Although operations are illustrated in the flowcharts/timing charts in this specification as being sequentially performed, this is merely an exemplary description of the technical idea of one embodiment of the present disclosure. In other words, those skilled in the art to which one embodiment of the present disclosure belongs may appreciate that various modifications and changes can be made without departing from essential features of an embodiment of the present disclosure, that is, the sequence illustrated in the flowcharts/timing charts can be changed and one or more operations of the operations can be performed in parallel. Thus, flowcharts/timing charts are not limited to the temporal order.

Although exemplary embodiments of the present disclosure have been described for illustrative purposes, those skilled in the art will appreciate that various modifications, additions, and substitutions are possible, without departing from the idea and scope of the claimed invention. Therefore, exemplary embodiments of the present disclosure have been described for the sake of brevity and clarity. The scope of the technical idea of the present embodiments is not limited by the illustrations. Accordingly, one of ordinary skill would understand that the scope of the claimed invention is not to be limited by the above explicitly described embodiments but by the claims and equivalents thereof.

**Claims**

1. A method executed by a vehicle control device, the method comprising:

   activating torque vectoring by-brake control when a vehicle travels a corner;
   calculating an actual differential slip of the vehicle and a threshold value;
   comparing the actual differential slip with the threshold value;
   maintaining the activation of the torque vectoring by-brake control when the actual differential slip is smaller than the threshold value; and
   gradually deactivating the torque vectoring by-brake control and activating a limited slip differential (LSD) when the actual differential slip is not smaller than the threshold value.

2. The method of claim 1, wherein the actual differential slip is calculated based on the following mathematical formula.

$$\Delta \boldsymbol{TiresGrip}_{actual} = \frac{\omega_L * r - Vx_L}{\omega_L * r} - \frac{\omega_R * r - Vx_R}{\omega_R * r}$$

   here, $w_L$ is an angular velocity of a left wheel of the vehicle, $w_R$ is an angular velocity of a right wheel of the vehicle, r is a radius of a wheel of the vehicle, $Vx_L$ is a tangential velocity of the left wheel, and $Vx_R$ is a tangential velocity of the right wheel.

3. The method of claim 2, wherein the $Vx_L$ is calculated by multiplying an angular velocity of the vehicle turning a corner by a cornering radius of the left wheel, and the $Vx_R$ is calculated by multiplying an angular velocity of the vehicle turning the corner by a cornering radius of the right wheel.

4. The method of any one of the preceding claims, wherein the calculating of the threshold value comprises:

   calculating an intermediate value based on the following mathematical formula,

$$\Delta \boldsymbol{TiresGrip}_{LockedLSD} = \frac{\psi * track}{\frac{(\omega_1 + \omega_2)}{2} * r}$$

   here, wi is an angular velocity of a left wheel of the vehicle, $w_2$ is an angular velocity of a right wheel of the vehicle, r is a radius of a wheel of the vehicle, track is a distance between the left wheel and the right wheel, and $\psi$ is an angular velocity of the vehicle turning the corner; and
   determining a value corresponding to a predetermined ratio of the intermediate value as the threshold value.

5. The method of claim 4, wherein when the actual differential slip is not smaller than the threshold value, the torque vectoring by-brake control is completely deactivated at the point when the actual differential slip is equal to the intermediate value.

6. A vehicle control device comprising:

   a memory; and
   at least one processor,
   wherein the least one processor is configured to:

activate torque vectoring by-brake control when a vehicle travels a corner,
calculate an actual differential slip of the vehicle and a threshold value,
compare the actual differential slip with the threshold value,
maintain the activation of the torque vectoring by-brake control when the actual differential slip is smaller than the threshold value, and
gradually deactivate the torque vectoring by-brake control and activate a limited slip differential (LSD) when the actual differential slip is not smaller than the threshold value.

7. The vehicle control device of claim 6, wherein the actual differential slip is calculated based on the following mathematical formula.

$$\Delta TiresGrip_{actual} = \frac{\omega_L * r - Vx_L}{\omega_L * r} - \frac{\omega_R * r - Vx_R}{\omega_R * r}$$

here, $w_L$ is an angular velocity of a left wheel of the vehicle, $w_R$ is an angular velocity of a right wheel of the vehicle, r is a radius of a wheel of the vehicle, $Vx_L$ is a tangential velocity of the left wheel, and $Vx_R$ is a tangential velocity of the right wheel.

8. The vehicle control device of claim 7, wherein the $Vx_L$ is calculated by multiplying an angular velocity of the vehicle turning a corner by a cornering radius of the left wheel, and the $Vx_R$ is calculated by multiplying an angular velocity of the vehicle turning the corner by a cornering radius of the right wheel.

9. The vehicle control device of any one of claim 6 to 8, wherein the at least one processor is further configured to:

calculate an intermediate value based on the following mathematical formula,

$$\Delta TiresGrip_{LockedLSD} = \frac{\psi * track}{\frac{(\omega_1 + \omega_2)}{2} * r}$$

here, wi is an angular velocity of a left wheel of the vehicle, $w_2$ is an angular velocity of a right wheel of the vehicle, r is a radius of a wheel of the vehicle, track is a distance between the left wheel and the right wheel, and $\psi$ is an angular velocity of the vehicle turning the corner, and
determine a value corresponding to a predetermined ratio of the intermediate value as the threshold value.

10. A non-transitory computer-readable recording medium in which an instruction is stored, wherein the instruction causes, when executed by a computer, the computer to perform:

activating torque vectoring by-brake control when a vehicle travels a corner;
calculating an actual differential slip of the vehicle and a threshold value;
comparing the actual differential slip with the threshold value;
maintaining the activation of the torque vectoring by-brake control when the actual differential slip is smaller than the threshold value; and
gradually deactivating the torque vectoring by-brake control and activating a limited slip differential (LSD) when the actual differential slip is not smaller than the threshold value.

<u>10</u>

FIG. 1

**FIG. 2**

START

DETERMINE THRESHOLD VALUE — S310

S320

ACTUAL DIFFERENTIAL
SLIP < THRESHOLD VALUE?

Yes

No

CALCULATE TRACTION THRESHOLD VALUE — S340

S350

ACTUAL TRACTION
INSIDE < TRACTION THRESHOLD
VALUE?

No

S330

CONTROL TORQUE
VECTORING
CONTROL TO
MAINTAIN ACTIVATION

Yes

CONTROL TORQUE VECTORING CONTROL
TO GRADUALLY DEACTIVATE TORQUE
VECTORING CONTROL AND ACTIVATE LSD — S360

END

*FIG. 3*

START

DETERMINE THRESHOLD
VALUE DURING COASTING          ~S410

ACTUAL DIFFERENTIAL
SLIP > THRESHOLD VALUE DURING     S420
COASTING          No

Yes

IS VEHICLE IN
OVERSTEERING STATE?     S430     No

Yes

CONTROL TORQUE
VECTORING CONTROL TO
GRADUALLY DEACTIVATE     S450
TORQUE VECTORING
CONTROL AND
ACTIVATE LSD

CONTROL TORQUE VECTORING
CONTROL TO MAINTAIN ACTIVATION     ~S440

END

# FIG. 4

**FIG. 5**

Europäisches
Patentamt

European
Patent Office

Office européen
des brevets

# EUROPEAN SEARCH REPORT

**Application Number**

EP 24 22 3614

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 10 221 931 B2 (TOYOTA MOTOR CO LTD [JP]) 5 March 2019 (2019-03-05) | 1,6,10 | INV. B60T8/1755 |
| A | * column 1, line 56 - column 23, line 21; figures 6-16 * | 2-5,7-9 | B60T8/32 B60W10/12 B60W10/16 |
| A | US 9 623 850 B2 (HITACHI AUTOMOTIVE SYSTEMS LTD [JP]) 18 April 2017 (2017-04-18) * the whole document * | 1-10 | B60W10/184 B60W30/18 |
| A | US 2019/322316 A1 (CHENNUPALLI GIRISH GOKUL [US] ET AL) 24 October 2019 (2019-10-24) * the whole document * | 1-10 | |
| A | CN 103 291 878 A (GM GLOBAL TECH OPERATIONS INC) 11 September 2013 (2013-09-11) * the whole document * | 1-10 | |

**TECHNICAL FIELDS SEARCHED (IPC)**

B60T
B60W

The present search report has been drawn up for all claims

| Place of search | Date of completion of the search | Examiner |
|---|---|---|
| Munich | 11 June 2025 | Graniou, Marc |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 24 22 3614

This annex lists the patent family members relating to the patent documents cited in the above-mentioned European search report.
The members are as contained in the European Patent Office EDP file on
The European Patent Office is in no way liable for these particulars which are merely given for the purpose of information.

11-06-2025

| Patent document cited in search report | | Publication date | Patent family member(s) | | Publication date |
|---|---|---|---|---|---|
| US 10221931 | B2 | 05-03-2019 | CN | 107448579 A | 08-12-2017 |
| | | | EP | 3243716 A1 | 15-11-2017 |
| | | | JP | 6451690 B2 | 16-01-2019 |
| | | | JP | 2017202743 A | 16-11-2017 |
| | | | US | 2017328461 A1 | 16-11-2017 |
| US 9623850 | B2 | 18-04-2017 | CN | 104703854 A | 10-06-2015 |
| | | | CN | 106828111 A | 13-06-2017 |
| | | | EP | 2905193 A1 | 12-08-2015 |
| | | | EP | 3511219 A1 | 17-07-2019 |
| | | | JP | 5970322 B2 | 17-08-2016 |
| | | | JP | 2014069766 A | 21-04-2014 |
| | | | US | 2015239442 A1 | 27-08-2015 |
| | | | US | 2016244038 A1 | 25-08-2016 |
| | | | US | 2017183000 A1 | 29-06-2017 |
| | | | WO | 2014054432 A1 | 10-04-2014 |
| US 2019322316 | A1 | 24-10-2019 | CN | 110386001 A | 29-10-2019 |
| | | | DE | 102019110085 A1 | 24-10-2019 |
| | | | US | 2019322316 A1 | 24-10-2019 |
| CN 103291878 | A | 11-09-2013 | CN | 103291878 A | 11-09-2013 |
| | | | DE | 102013202836 A1 | 10-10-2013 |
| | | | US | 2013231837 A1 | 05-09-2013 |

EPO FORM P0459

For more details about this annex : see Official Journal of the European Patent Office, No. 12/82